Europäisches Patentamt

European Patent Office

Office européen des brevets

(19)

(11) Publication number: **0 178 154**
A2

# (12) EUROPEAN PATENT APPLICATION

(21) Application number: **85307189.2**

(22) Date of filing: **08.10.85**

(51) Int. Cl.⁴: **C 04 B 35/44**, C 04 B 28/34,
C 04 B 35/66
//
(C04B28/34, 14:30, 14:32, 20:00)

(30) Priority: **09.10.84 US 659921**

(43) Date of publication of application: **16.04.86**
**Bulletin 86/16**

(84) Designated Contracting States: **AT BE CH DE FR GB IT
LI LU NL SE**

(71) Applicant: **THE DOW CHEMICAL COMPANY, 2030 Dow
Center Abbott Road P.O. Box 1967, Midland,
MI 48640 (US)**

(72) Inventor: **Cisar, Alan James, 2546 Coopers Post Lane,
Sugar Land Texas 77478 (US)**

(74) Representative: **Raynor, John et al, W.H. Beck, Greener
& Co 7 Stone Buildings Lincoln's Inn, London WC2A 3SZ
(GB)**

(54) Refractory materials, their production and use.

(57) Disclosed is a mortar, coating or castable composition comprising:

(1) 5 to 85 percent by weight of a $MgAl_2O_4$ spinel, heated to above about 700°C and at least about 6% of which has been calcined and sintered to at least about 1600°C;

(2) 0 to 80 percent by weight of a substantially non-reactive filler;

(3) 1 to 20 percent by weight of an inorganic acidic phosphate material capable of decomposing on heating to a material containing $(PO_3)^-$ units;

(4) 4 to 20 percent by weight of water; and

(5) optionally, 0 to 5 percent by weight of handling agents.

## REFRACTORY MATERIALS, THEIR PRODUCTION AND USE

This invention concerns refractory compositions useful in mortars, coatings and casting, gunning or ramming mixtures.

The following patents and literature references represent some aspects of the general field of $MgAl_2O_4$ spinels used in mortars, castables and coatings and the like employing phosphorous acids as a reactive component. U.S. Patent 3,730,744 discloses aggregate cast shapes employing $Al(H_2PO_4)_3$ as the bonding solution which contains alkalizing ions as the curing agents. U.S. Patent No. 3,285,755 teaches ammonium phosphate in combination with aluminum phosphate plus MgO (from calcined dolomite) where spinel is mentioned as an aggregate. U.S. Patent 4,459,156 discloses a spinel composition.

A fundamental review of phosphate bonding is found in J. AMER. CERAMIC SOCIETY, Vol. 133, No. 8, August 1, 1950 by William David Kingery. Another review is found in Ceramic Bulletin, Vol. 56, No. 7, page 640 by J.E. Cassidy (1977). Other studies are as follows: Ceramic Bulletin, Vol 59, No. 7 (1980) by Francisco J. Gonzales and John W. Halloran, "Reaction of Orthophosphoric Acid with Several Forms of Aluminum Oxide" and an abstract of a Russian Scientific paper authored by L. B. Khoroshavin, V. A. Ryabin, I. E. Sipeiko, V. N. Naumov, G. A. Sychev, V. Ya. Pavlov, V. M. Chyrin, N. F. Serenko, B. V. Ponomarev, and E. P. Kosolapova, Eastern Institute of Refractories, Ural Scientific-Research Institute of Chemistry, Perm Chemical Plant, All-Union Scientific-Research Institute for the Power Supply in Nonferrous Metallurgy, from Ogneupory, No. 3, pp. 34-36, March, 1977 (translated).

The two review articles, the one by Kingery (covering the art to 1949) and the other by Cassidy (from 1949-1977) form a very complete picture of the state of technology on phosphate bonding. Materials listed as forming phosphate bonds with phosphoric acid are: $TiO_2$, $CaO$, $FeO$, $Fe_2O_3$, $NiO$, $ZnO$, $ZrO_2$, $MgO$, $Al_2O_3$, and $Cr_2O_3$. These may be reacted as pure compounds or as constituents in mineral compositions, i.e., asbestos, bauxite or clay. The most common bonding mechanism using phosphoric acid is the reaction with alumina to form $Al(H_2PO_4)_3$ which is also the starting material in many formulations in place of $H_3PO_4$. $Al(H_2PO_4)_3$ further reacts with either alumina, clay or bauxite, resulting in orthophosphates ($MgHPO_4 \cdot 3H_2O$ or $AlH_3(PO_4)_2$) as the bond.

In the $H_3PO_4$ + $Al_2O_3$ system addition of $Mg^{+2}$, $Fe^{+3}$ or $Be^{+2}$ ions increase bonding strength but these ions also contribute to "premature" setting.

The patent literature very closely follows the above literature review; that is, while it teaches phosphate bonded systems, it only mentions spinel as

32,776-F

one possible aggregate material. Also these aggregates are not "reactive" with any activity due to free MgO and are typically part of the coarse portion with very few fines (material < 325 mesh).

In accordance with the present invention, effective compositions can be produced to bind, as a mortar, both porous and non-porous materials such as refractory brick, as a protective coating for such ceramic and non-ceramic shapes, and fiber products, as well as producing castings such as brick, covers, nozzles, including fiber (ceramic or metal) reinforced castings. The ingredients for producing the various compositions are (1) at least one reactive $MgAl_2O_4$ spinel, (2) optionally, non-reactive fillers, (3) an inorganic acidic phosphate material (4) water, and (5) optionally, handling agents.

The compositions of the present invention having non-hydroxide reactive components and fillers in combination with an acidic phosphate source, such as phosphoric acid and/or aluminum dihydrogen phosphate are unique in that a stronger mortar with longer consistent shelf lives up to 60 plus days can be prepared. In addition the formulations contain less water tahn similar formulations employing hydroxide containing components.

In accordance with the present invention there is provided a mortar, coating or castable composition which is usable in, particularly, the metals industry for construction and repair of refractory linings and coating of component parts for example, in melting furnaces, electrolytic metal winning cells, component parts for

- 4 -

metal casting machines, including gates, transfer pipes and troughs, nozzles and the like, as well as refractory linings and linings and coatings in the steel, chemical and petrochemical industries.

The present invention provides refractory compositions, particularly mortar, coating or castable refractory compositions comprising:

(1) 5 to 85 per cent by weight of a reactive $MgAl_2O_4$ spinel, heated to above about 700°C and at least about 6 per cent of which has been calcined and sintered to at least about 1600°C;

(2) preferably, 0 to 80 per cent by weight of a substantially non-reactive filler;

(3) 1 to 20 per cent by weight of an inorganic acidic phosphate material capable of decomposing on heating to a material containing $(PO_3)^-$ units;

(4) 4 to 20 per cent by weight of water; and

(5) preferably, 0 to 5 per cent by weight of handling agents.

The $MgAl_2O_4$ spinel of (component 1) is usually prepared by the process described in U.S. Patent 4,400,431.

The spinel component (1) may be a mixture of which from 5 to 85 per cent by weight has been calcined to a temperature of from 1600° to 1650°C, or may be a mixture comprising from 0 to 25 per cent by weight of a spinel calcined to from 700° to 800°C, and from 0 to 50 per cent of a spinel calcined to from 700° to 1600°C, preferably from 800° to 1600°C.

The non-reactive filler of (component 2) is usually highly sintered such as tabular alumina, fused grain alumina, fused grain spinel, $MgAl_2O_4$ heated to above 1650°C, as well as other fused grain materials such as $ZrSiO_4$, SiC and steel fibers.

The inorganic acidic phosphate material (component 3), is frequently a phosphorous compound such as $Al(H_2PO_4)_3$ or $H_3PO_4$ or a mixture thereof. The material must be capable of decomposing to form $(PO_3)^-$ units on heating, such as during the drying out of the formulation, usually at above about 200°C.

Water (component 4) is employed as necessary to give workability to the binder composition, as are (preferably handling agents (component 5). Total water content usually employed is from about 4 to about 20 weight percent of the total composition.

Suitable handling agents, including set modifiers, (component 5) include activated alumina, fumed alumina ($Al_2O_3$), glycerine, polyvinyl alcohol, MgO, $Mg(OH)_2$ or mixtures of two or more, employed in from 0 to about 5 weight percent of the total composition. Other well known handling agents may also be employed.

Depending upon the ultimate use of the composition, various fillers, fibers (ceramic and/or metal), aggregates and the like may be added to give compression strengths, reduce density and/or improve bond strength, and insulating properties as obtained by incorporating these materials in conventional mortars, coatings, castables and the like.

Formulations containing the aforedescribed components are hereafter set forth in tabular form to illustrate the variety of mixtures of those components within the scope of the present invention which produce excellent mortars, coatings and the like for ceramic bodies which are to be put into severe corrosive and/or high temperature service.

It is to be understood that the compositions of this invention, in addition to being mortars and coatings, may also be used in preparing castables, ramming mixtures, gunning mixtures, and the like; or used as the binder system in pressed, extruded, or cast refractory shapes.

The following table illustrates the preferred operable ranges of general components falling within the present invention:

| | A* | | | B | | C |
|---|---|---|---|---|---|---|
| | $MgAl_2O_4$ | | Filler | $Al(H_2PO_4)_3$ | $H_3PO_4$ | $H_2O$ |
| Ex. 1 | 1650° 35.8 | 1200° 9.3 | Tab. $Al_2O_3$ 30.8 | -- | 9.9 | 14.2 |
| Ex. 2 | 1650° 50 | | -- 34 | -- 6.5 | -- 2.3 | -- 6.9 |
| Ex. 3 | 1650° 46.2 | | -- 31.5 | -- 9.3 | -- 1.2 | -- 11.8 |
| Ex. 4a | 1650° 34.6 | | fused $MgAl_2O_4$ 26.8 tabular $Al_2O_3$ 21.3 | 7.3 | 0.9 | 9.1 |
| Ex. 4b | 1650° 33.6 | | fused $MgAl_2O_4$ 26.1 tabular $Al_2O_3$ 20.7 steel fibers 2.7 | 7.1 | 0.8 | 8.9 |
| Ex. 5 | 1650° 21.3 | | SiC 66.6 | 5.7 | -- | 6.4 |

| | A* | | | B | C |
|---|---|---|---|---|---|
| | $MgAl_2O_4$ | Filler | $Al(H_2PO_4)_3$ | $H_3PO_4$ | $H_2O$ |
| Ex. 6 | 1650°<br>9.3 | SiC<br>79.4 | 5.6 | -- | 5.6 |
| Ex. 7 | 1650° 1600° 800°<br>10.7 16.4 5.7 | Zircon ($ZrSiO_4$)<br>41.1 | 10.3 | -- | 15.8 |
| Range % | 5-85 | 0-80 | 0-20 | 0-10 | 4-20 |
| Totals A, B, C | | 60-90 | 1-20 | | 4-20 |

with or without 0-5%, by weight bond on the total weight of handling agents.

* The format used for items in the first columns is a two-line entry with thermal history in °C above and percentages of batch below. All temperatures are Celsius. The entries appearing in the second column set forth the kind of filler with the percentage appearing below.

In the following examples, unless otherwise denoted, the reactive $MgAl_2O_4$ spinel is derived from a coprecipitation process in which a mixture of magnesium aluminum hydroxides $(Mg_xAl_y(OH)_z)$ and aluminum hydroxides and/or aluminum oxyhydroxides are produced then calcined and/or sintered to obtain the species employed in this invention. The magnesium aluminum hydroxide phase represented above may contain other anions partially substituting for hydroxide (e.g. $Cl^-$, $NO_3^-$, $SO_4^=$, $CO_3^=$), the presence and amount of which will be determined by the type of reactant salts used in the coprecipitation and the type and duration of subsequent treatments, chemical or thermal, to which the precipitate phase has been subjected. The precipitate of magnesium/aluminum and aluminum hydroxy compounds is referred to as spinel precursor. The overall Al/Mg ratio with this mixture will be very nearly 2.0, unless otherwise noted. If this ratio significantly deviates from 2.0 (e.g. <1.90 or >2.10) segregated MgO and/or $Al_2O_3$ phases are normally observed in the calcined or sintered product and these can affect reactivity.

The $Al(H_2PO_4)_3$, $H_3PO_4$, fused grain $Al_2O_3$, fumed alumina, and tabular alumina are all commercially available, substantially pure compounds and/or solutions. The sintered spinels may be commercially available fused grain material or a highly sintered, (above 1650°C) spinel prepared in accordance with U.S. Patent 4,400,431.

Formulations may consist of two main parts. The binder phase is produced by reacting an acidic phosphate species with at least one reactive oxide species. This can be carried out prior to the addition of the aggregate or filler material which latter component(s) may be inert, as in the case of fused grain or tabular $Al_2O_3$, or highly sintered (>1650°C) $MgAl_2O_4$, or may have some degree of reactivity, as in the case of $MgAl_2O_4$ sintered to ≤1650°C or calcined $Al_2O_3$. This reactivity is due to changes in surface area, degree of crystalline perfection and/or population of surface hydroxyls available for reaction.

The preferred manner of preparing formulations of the present invention is to combine the reactive spinel, the inert fillers if used, and any other solid components as a dry mix then adding the dry mix to the liquid component(s). Although reverse mixing may be employed it is easier and requires less energy intensive mixing to add the dry mix to the liquid.

EXAMPLE 1

A magnesium aluminum spinel powder ($MgAl_2O_4$) was prepared in pilot plant quantities in the manner of Example 4 of U.S. Patent 4,400,431. A portion of the sample was sintered at about 1650°C then ground to pass through a U.S. Standard 200 mesh sieve and another portion calcined at about 1200°C and likewise ground to pass through a U.S. Standard 200 mesh sieve. One hundred grams of the 1650°C and 26 grams of the 1200°C materials described above were intimately mixed with 86 grams of 100 mesh (U.S. Standard) tabular alumina as a filler. The dry mixture was combined with 32.5 grams of 85 percent $H_3PO_4$ and 35.0 grams of water. The resulting mixture contained 14 percent water (including the 4.88 grams in the 85 percent $H_3PO_4$) and produced a

mortar having a compressive strength of 7600 psi (52364 kPa) and a flexural modulus of 950 psi (6545 kPa) when bonded to a DV-38 high alumina brick (A. P. Green Refractories).

EXAMPLE 2

A mixture of 60.5 grams of magnesium aluminum spinel sintered at 1650°C and ground to pass a U.S. Standard 200 mesh sieve and 41.3 grams of tabular alumina, sized to pass a 100 mesh sieve is added to a solution of 7.9 grams of $Al(H_2PO_4)_3$ and 2.72 grams of $H_3PO_4$ in total 8.38 grams $H_2O$. A casting of this mortar has a compressive strength in excess of 10,000 psi (68900 kPa). This example demonstrates a mortar with reduced water content.

EXAMPLE 3

126 grams of $MgAl_2O_4$ sintered to ~1650°C and 86 grams of tabular alumina, were mixed and added to a solution of 25.4 grams of $Al(H_2PO_4)_3$ and 3.4 grams of $H_3PO_4$ in 32.2 grams of $H_2O$. This mortar formulation gives a bond strength of 2900 psi (19981 kPa) to high alumina brick and has shown excellent performance in molten salt electrochemical cells when used with both $\alpha-Al_2O_3$ and $\beta-NaAl_{11}O_{17}$ bricks.

The use of tabular (sintered) alumina in place of fused grain alumina offers several advantages. The first of these is strength, with tabular containing formulations consistently out performing fused grain formulations. Second is better handling characteristics, which reduces the need for handling modifiers. Last is price, with tabular alumina costing less than fused grain alumina.

Mortars made in accordance with Example 3 were made up in 60 to 100 lb. (222 to 370 kg) batches and used as the mortar in laying up brick in magnesium reduction cells. In service tests for >8 months compared to brick layed up with conventional cell mortar (alumina/ phosphate bond or alumina/silicate bond) showed the mortar of the present invention to be superior to the conventional mortar.

Mortars of similar constitution have been used to coat the refractory used in covers for magnesium reduction cells and put into service with good results.

Example 4

375 g. of $MgAl_2O_4$ sintered at ∿1650°C and ground to pass through a U.S. standard 200 mesh sieve is mixed with 291 g. of fused grain $MgAl_2O_4$, sized to pass a 20 mesh sieve but not a 100 mesh sieve, and 231 grams of tabular alumina, sized to pass a 48 mesh sieve. This mixture is added to a solution of 79.5 grams $Al(H_2PO_4)_3$ and 9.35 grams of $H_3PO_4$ in 99.1 grams $H_2O$ to produce a castable material with good handling characteristics. After firing at 500°C this refractory has a flexural strength of 1600 psi (11024 kPa). This example demonstrates the improvement in strength obtained with the use of metal fiber reinforcement.

If 30 grams of rolled and sheared stainless steel fibers (roughly 1"x0.02"x0.006"; 2.54 cm x 0.05 cm x 0.02 cm) are added, the flexural strength increases 25 percent to 2000 psi (13780 kPa).

0178154

Example 5

9.4 kg of $MgAl_2O_4$ sintered to ∿1650°C and ground to pass through a U.S. standard 40 mesh seive with at least 90 percent also passing a 100 mesh sieve and a substantial portion also passing a 325 mesh sieve was slurried in a solution consisting of 2.524 kg of $Al(H_2PO_4)_3$ in 2.846 kg of $H_2O$. To this slurry were added 9.8 kg of commercially available 6 mesh SiC and 19.6 kg of SiC which passed an 8 mesh seive. The latter was produced by ball milling and sizing the 6 mesh material.

This material, which has a bulk density of 155 lb/ft$^3$ (248 kg/m³) and a compressive strength of 9000 psi (62010 kPa) after firing at 1000°C, was used to cast a 12 inch (30.3 cm) diameter 18 inch (45.7 cm) high crucible which was used successfully for 3 months in a commercial induction furnace for melting non-ferrous metals, delivering 38 heating cycles, compared to 2 for the crucible supplied by the furnace manufacturer.

Example 6

220 grams of $MgAl_2O_4$ sintered to ∿1650°C and ground to pass a U.S. standard 100 mesh sieve were added to a solution of 132.5 grams of $Al(H_2PO_4)_3$ in 132.5 grams $H_2O$. This was followed sequentially by additions of 220 grams of SiC sized to pass a 100 mesh sieve, 845.9 grams of SiC sized to pass a 12 mesh sieve, 243.1 grams of commercial 8 mesh SiC, and 561 grams of commercial 6 mesh SiC. This castable, with a fired bulk density of 138 lb/ft$^3$ (220.8 kg/m³) and a flexural strength of 1500 psi (10335 kPa), offers improved heat conduction as compared to the formulation in Example 5.

Example 7

Zircon (zirconium silicate, $ZrSiO_4$) is a widely used refractory in the glass making industry. By using magnesium aluminum spinel ($MgAl_2O_4$) as the basis of a phosphate bonded matrix, very strong zircon refractory products can be produced.

In this example 7.0 grams of $MgAl_2O_4$ calcined to ~800°C and ground to pass a U.S. standard 100 mesh sieve is slurried in a solution of 12.6 grams $Al(H_2PO_4)_3$ in 19.2 grams $H_2O$. To this slurry are added 20 grams of $MgAl_2O_4$ sintered to ~1600°C and ground to pass a 100 mesh sieve, 13 grams $MgAl_2O_4$ sintered to above 1600°C and sized to pass a 100 mesh sieve but to be retained on a 200 mesh seive, and 50 grams of $ZrSiO_4$ sized to pass a 325 mesh seive. The mortar produced has good handling properties, and after firing to 1000°C, a compressive strength of 7200 psi (49608 kPa) and an adhesion to high alumina brick of 960 psi (6614 kPa).

0178154

- 15 -

CLAIMS

1.   A refractory composition comprising:

(a) 5 to 85 per cent by weight of reactive $MgAl_2O_4$ spinel, which has been calcined to above about 700°C and at least about 6 per cent of which has been calcined and sintered to at least about 1600°C;

(b) 1 to 20 per cent by weight of an inorganic acidic phosphate material capable of decomposing on heating to a material containing $(PO_3)^-$ units; and

(c) 4 to 20 per cent by weight of water.

2.   A composition as claimed in claim 1 which also comprises a substantially non-reactive filler, in an amount of up to 80 per cent by weight.

3.   A composition as claimed in claim 1 or claim 2, which also comprises one or more handling agents, in an amount of up to 5 per cent by weight.

4.   A composition as claimed in any one of the preceding claims wherein from 51 to 85 per cent by weight of the spinel (component a) is an $MgAl_2O_4$ spinel which has been calcined to a temperature of from 1600-1650°C.

5.   A composition as claimed in any one of claims 1 to 3 wherein from 0 to 25 per cent by weight of component (a) is a $MgAl_2O_4$ spinel which has been calcined to between about 700 and about 800°C and from 0 to 50 per cent by weight of component (a) is a

- 16 -

$MgAl_2O_4$ spinel which has been calcined to between about 800° and about 1600°C.

6. A composition as claimed in any one of the preceding claims wherein the filler is fused alumina, tabular alumina, fused $MgAl_2O_4$, SiC, $ZrSio_4$ or a mixture of steel fibers, tabular alumina and fused $MgAl_2O_4$.

7. A composition as claimed in any one of the preceding claims wherein the said acidic phosphate material is monoaluminum phosphate $[Al(H_2PO_4)_3]$, phosphoric acid, or a mixture of monoaluminum phosphate and phosphoric acid.

8. A composition as claimed in claim 1 consisting essentially of 100 parts by weight of about 200 mesh 1650°C sintered $MgAl_2O_4$, 26 parts by weight of about 200 mesh 1200°C calcined $MgAl_2O_4$, 86 parts by weight of 100 mesh tabular alumina, 32.5 parts by weight of 85 per cent $H_3PO_4$ and 35.0 parts by weight of water.

9. A refractory composition as claimed in claim 1 consisting essentially of a mixture of 60.5 parts by weight of 200 mesh magnesium aluminum spinel sintered to 1650°C, 41.3 parts by weight of tabular alumina sized to pass a 100 mesh screen, 7.9 parts by weight of $Al(H_2PO_4)_3$, 2.72 parts by weight of $H_3PO_4$ and 8.38 parts by weight of water.

10. A refractory composition as claimed in claim 1 consisting essentially of 126 parts by weight of $MgAl_2O_4$ sintered to about 1650°C, 85 parts by weight of tabular alumina 25.4 parts by weight of $Al(H_2PO_4)_3$, 3.4 parts by weight of $H_3PO_4$ and 32.2 parts by weight of water.

11. A composition as claimed in claim 1 consisting essentially of 375 parts by weight of $MgAl_2O_4$ sintered to about 1650°C and ground to pass through a U.S. standard 200 mesh sieve, 291 parts by weight of fused grain $MgAl_2O_4$, sized to pass a 20 mesh sieve but not a 100 mesh sieve, 231 parts by weight of tabular alumina, sized to pass a 48 mesh sieve, 79.5 parts by weight of $Al(H_2PO_4)_3$, 9.35 parts by weight of $H_3PO_4$, and 99.1 parts by weight of water.

12. A composition as claimed in claim 1 consisting essentially of 9.4 parts by weight of $MgAl_2O_4$ sintered to about 1650°C and ground to pass through a U.S. standard 40 mesh sieve, with at least 90 per cent also passing a 100 mesh sieve and a substantial portion also passing a 325 mesh sieve, 2.524 parts by weight of $Al(H_2PO_4)_3$, 2.846 parts by weight of water, 9.8 parts by weight of 6 mesh SiC and 19.6 parts by weight of 8 mesh SiC.

13. A refractory composition as claimed in claim 1 consisting essentially of 220 parts by weight of $MgAl_2O_4$ sintered to about 1650°C and ground to pass a U.S. standard 100 mesh sieve 132.5 parts by weight of $Al(H_2PO_4)_3$, 132.5 parts by weight of water, 220 parts by weight of SiC sized to pass a 100 mesh sieve, 845.9 parts by weight of SiC sized to pass a 12 mesh sieve, 243.1 parts by weight of commercial 8 mesh SiC, and 561 parts by weight of commercial 6 mesh SiC.

14. A composition as claimed in claim 1 consisting essentially of 7.0 parts by weight of $MgAl_2O_4$ calcined to about 800°C and ground to pass a U.S. standard 100 mesh sieve, 12.6 parts by weight $Al(H_2PO_4)_3$, 19.2 parts by weight $H_2O$, 20 grams of $MgAl_2O_4$ sintered to about 1600°C and ground to pass a 100 mesh sieve, 13 parts by weight $MgAl_2O_4$ sintered to above 1600°C and sized to pass a 100 mesh sieve but to be retained on a 200 mesh sieve, and 50 parts by weight of $ZrSiO_4$ sized to pass a 325 mesh sieve.

15. A process for preparing a fired refractory composition, which process comprises firing a composition as claimed in any one of the preceding claims.

16. The use of a composition as claimed in any one of claims 1 to 14 as a mortar, coating composition, casting composition, gunning mixture, or ramming mixture.